# EUROPEAN PATENT SPECIFICATION

(11) **EP 1 212 887 B1**
(45) Date of publication and mention of the grant of the patent: **29.10.2008**
(21) Application number: 99974022.8
(22) Date of filing: 15.09.1999
(51) Int. Cl.: H04M 3/54

(54) **METHOD OF NOTIFYING A CALL FORWARDING PARTY**
VERFAHREN ZUR BENACHRICHTIGUNG EINES RUFWEITERLEITUNGSTEILNEHMERS
PROCEDE DE NOTIFICATION D'UNE PARTIE A L'ORIGINE D'UNE TRANSMISSION D'APPEL

(43) Date of publication of application: 12.06.2002
(73) Proprietor: Nokia Siemens Networks Oy, 02610 Espoo (FI)
(72) Inventor: SIISKONEN, Marko, FIN-37100 Nokia (FI); WALLENIUS, Jukka, FIN-00940 Helsinki (FI)
(74) Representative: TBK-Patent
(86) International application number: PCT/EP1999/006827
(87) International publication number: WO 2001/020888

(56) References cited:
- EP-A- 0 588 571
- US-A- 4 476 349
- US-A- 5 657 382
- US-A- 5 930 700
- BOLTJES C J: "FACILITIES FOR USERS OF SOPHO-SET FEATURE PHONES" PHILIPS TELECOMMUNICATION REVIEW,NL,PHILIPS TELECOMMUNICATIE INDUSTRIE N.V. HILVERSUM, vol. 48, no. 1, 1 March 1990 (1990-03-01), pages 20-27, XP000116333
- HUEBNER D L: "Intelligent telephones and generic switching: a distributed processing PABX architecture" ISS '84. XI INTERNATIONAL SWITCHING SYMPOSIUM, FLORENCE, ITALY, 7-11 MAY 1984, pages 23A1/1-6 vol.2, XP002131401 1984, Milano, Italy, Assoc. Elettrotecnica & Elettronica Italiana, Italy

## Description

### Field of the Invention

The present invention relates to a method of notifying a call forwarding party about a forwarded call. Particularly, the present invention relates to a method of limiting a duration of a forwarded call.

Furthermore, the present invention relates to a communication network and a terminal being capable for that purpose.

### Related Background Art

Recently, a major benefit connected with the use of mobile terminals like mobile phones or the like is the increased flexibility the user gains. Accordingly, providing a service for forwarding incoming calls which cannot be accepted was a logical consequence.

For a further convenience of this service, the user has to be notified in one way or the other that a forwarding took place. Basically, such a notification is known from the blue book specification Q.730 of the International Telegraph and Telephone Consultative Committee (CCITT). This specification, however, teaches nothing about the contents or the implementation of such a notification.

From document US-A-4 476 349 there is known a call message service which generates and stores a callback message for a called terminal. This message is able to notice the identity of the calling terminal and the identity of the destination of the forwarding. Additionally, the forwarded times are stored, i.e. it is noticed when the forwarded calls took place. However, the subject matter of document US-A-4 476 349 is directed to a service in private branch exchanges (PBX) and the information about the forwarded calls provided by this service must be retrieved by dialing a feature code from a phone.

### Summary of the Invention

Accordingly, it is an object of the present invention to provide a method of notifying a call forwarding party about a forwarded call which is free from the above drawbacks.

In particular, the present invention aims to provide a respective method which is applicable to modern extended communication networks. Consequently, the present invention proposes a communication network and a terminal for that purpose.

According to the present invention, this object can be solved by a method of notifying a call forwarding party about a forwarded call, wherein said method comprises the following steps: Firstly, a call from a calling party is forwarded to a destination defined by a call forwarding party; then, a content of a notification about said forwarded call is established; finally, said notification is sent by a service of a communication network to a terminal of said call forwarding party, wherein said notification comprises said content.

The defining of the destination by the call forwarding party may be an indirect process, for example, a set of possible forwardings to different numbers may have been specified by the call forwarding party. However, a forwarding service may determine the number, which can be based on several criteria.

The content of the notification can comprise information about a calling party number, a call duration, a type of forwarding, a time of forwarding, a call charge and a number to which said call has been forwarded. According to the present invention, it is at least one of those, but a maximum of information included in the notification increases the benefit of the present invention. Moreover, if the information comprised by said content of said notification corresponds to data which is processable by said terminal of said call forwarding party, which can be the case according to the present invention, there can even more comfortable advantages be achieved.

One thereof can be that it is possible to predefine a break-off condition for said forwarded call by a user of said terminal, and that said notification is sent when said break-off condition is fulfilled, after which said user of said terminal is prompted to accept or refuse a continuation of said forwarded call. Having processable data in the notification, the aforementioned could be easily obtained while without processable data an implementation would be rather difficult but still conceivable. The expression "processable" in this connection is to be understood such that data corresponding to the information included in the notification comes along in a format which allows a direct processing by the respective terminal. That is, for example, that different content of the notification can be easily distinguished, and so on.

Clear examples for such a break-off condition are a maximal call charge or a maximal call duration, because if the call forwarding party pays for the forwarding leg, she or he may be very interested to limit such calls but have the possibility to decide from case to case whether the forwarding call can continue. Accordingly, this break-off condition can depend on the calling party number, including the possibility that no break-off condition exists for some certain calling party numbers.

Although it is clear that an input to said terminal in reaction to said prompting can be manually performed by the user of said terminal and said forwarded call would be cleared if there is no input within a specified time, it might be rather more important that a reaction of said terminal to said prompting is automatically performed according to a presetting of said terminal, which presetting would be input by said user. The automated case is advantageously supported if processable data is present in the aforesaid sense.

According to the present invention, the object can further be achieved by a communication network comprising a call forwarding service device which is able to determine a calling party number; a device for measuring a call duration of a forwarding call; and a service device for sending a notification to a terminal of a call forwarding party, thus having the substantial elements for carrying out some aspects of the present invention.

However, it is also desirable that the call forwarding service device is also able to determine a type of forwarding, a time of forwarding, a call charge and a number to which said call has been forwarded.

With respect to an implementation of the functionalities of a call forwarding service device, a measuring device, a notification sending service device and other devices advantageous for carrying out the invention, it is of course conceivable that at least some of them are implemented into one single device, or on the other hand, that a single functionality is distributed over several devices.

Furthermore, according to the present invention, there is provided a terminal for a handling of call forwarding, wherein said terminal comprises means adapted for setting a call forwarding service device of a communication network to which network said terminal subscribes; means adapted for receiving a notification about a forwarded call; and means adapted for displaying a content of said notification. According to the aforesaid it is advantageous if the terminal further comprises means for processing data corresponding to information comprised by said content of said notification, and another advantageous modification of the terminal is if it further comprises means for automatically performing a reaction to a prompting of a user of said terminal by a service of said communication network for sending said notification, which automatic performance is preset by said user.

It is to be noted that, throughout the present specification, CAMEL and IN designates any solution in which a call, connection or session processing node contacts a service control function which issues instructions to the respective node. The contact to the service control function is based on a trigger information stored in the respective nodes. The trigger information may specify situations in the course of a call, connection or session handling. The service control function may be internally distributed. Moreover, the corresponding IN protocol could be any protocol between a controlling entity, such as a service controller (e.g. CAMEL Service Environment, CSE), responsive to a triggering from a call, and a session or connection processing node. The IN protocol may be e.g. an object oriented interface where the operations are object methods or invocations.

It is to be noted further that throughout the present specification, WAP and WTA designate any solution in which there is a content execution environment (user agent) at the terminal side and this environment is capable of controlling terminal (MS) functionalities such as call control, mobility management MM and user interface. Furthermore, the execution environment may receive content from the network spontaneously or it may be provided with references to content to be downloaded. The content may be hypertext, markup language code, any interpreted or even native or virtual machine code.

Further advantages of the present invention will become apparent from the description of the preferred embodiments of the present invention, which will be described herein below by way of example with reference to the accompanying drawings.

### Brief Description of the Drawings

Fig. 1 shows a flow chart representing an extended embodiment of the present invention.
Fig. 2 shows a schematic view of the elements of a communication network and their interaction as is presented by this invention.
Fig. 3 shows a signaling sequence between certain devices of a communication network according to a further embodiment of the present invention.
Fig. 4 shows a signaling sequence between certain devices of a communication network according to a still further embodiment of the present invention.

### Description of the Preferred Embodiments

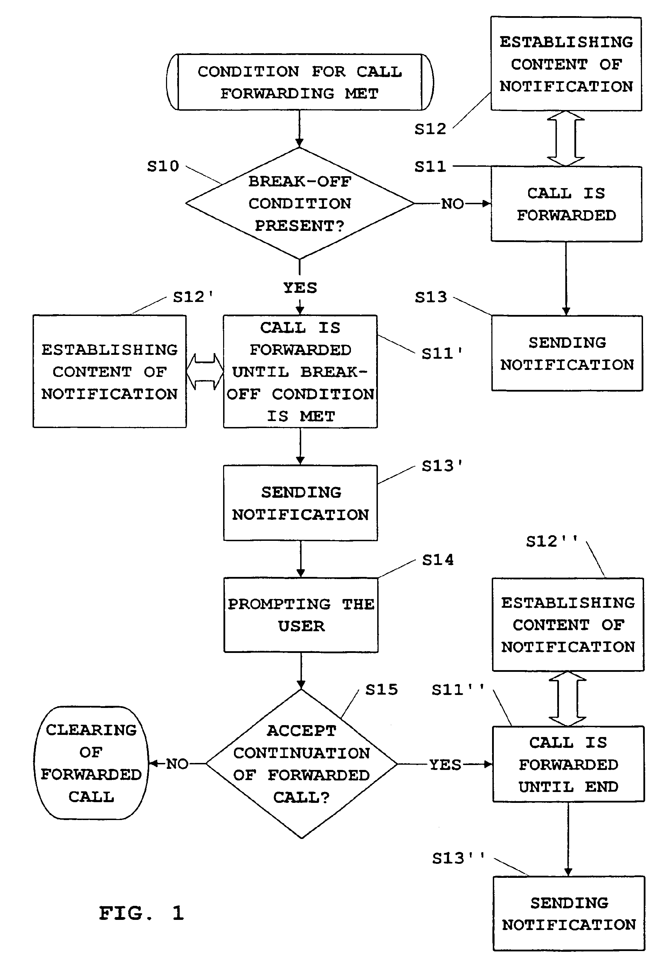

Referring now to Fig. 1, there is shown a flow-chart of a method of notifying a call forwarding party about a forwarded call, wherein the most common cases of the invention presently conceivable are depicted for an overview in toto.

As can be gathered from Fig. 1, the starting condition for the depicted procedure is that a call is forwarded. This may usually be the case if a terminal of a user which is called is presently closed or has lost contact with a respective communication network. More complicated circumstances for an activation of a call forwarding are of course conceivable. However, the present invention is in any case not limited to the reason for call forwarding.

In a following step S10, the procedure distinguishes between the cases if simply a notification about a forwarded call is sent to the call forwarding party, or if network, terminal, and user, respectively, shall interact with the call forwarding process. Namely, the point is whether a break-off condition for the call forwarding is present or not.

Consequently, if there is no break-off condition, the call will be forwarded in its full length corresponding to step S11 of Fig. 1. According to the present forwarding services and those to come, there might be a lot of parameters in which call forwardings might differ from each other. These parameters, however, can be of particular interest to the call forwarding party, i.e. a user of a terminal which has been called. Of course, the identity of the calling party (its number) and the time when the calling and in consequence the forwarding took place obviously are of interest to the called party. Moreover, if the forwarding service of the respective communication network allows to activate different forwarding designations, e.g. depending on the calling number or the like, this would of course also be of interest to know. Further examples for such parameters are the type of forwarding, the duration of the forwarded call and the charge of the forwarded call, wherein still further examples are conceivable.

As is apparent from these above examples for such parameters, either they are immediately clear in the moment when the forwarded path is established, or they develop with the forwarded call thus being fixed with the end of the call. Since the present invention aims to notify a call forwarding party about a forwarded call, the content of this notification should be established in close connection to the performance of the call forwarding. When the step S12 of establishing the content of the notification is finished, which may typically be with the end of the forwarded call, the notification can be sent to the call forwarding party in a step S13. In conclusion, a process for notifying a call forwarding party about a forwarded call is completed therewith. In any case, it is to be noted that the present invention is not limited to such a close connection of the content establishment to the end of the forwarded call.

However, since it might be usual that the call forwarding party pays for the forwarding leg, it is clear that there might be the wish to limit the duration of a forwarded call. By the same token, the charge for the forwarded call can be dependent from other factors, thus, if all those factors are known, the forwarding party might wish to expressly have an upper charge limit for one forwarded call.

In this case, a break-off condition for the forwarded call will indeed be present in step S10 of the present procedure. According to the present invention, this break-off condition is of course not limited to the two aforesaid examples but can rather be chosen among all of those mentioned above as parameters of a forwarded call and others conceivable.

Anyway, if there is a break-off condition present in step S10, the call will be forwarded in a step S11' until this break-off condition is met. For an establishment of a content of a respective notification about the forwarded call in a step S12' the same is valid as was mentioned above in connection with the step S12.

The notification to be sent in a step S13' will now contain a hint that a forwarded call was interrupted due to the meeting of a break-off condition, and thus, the user of a terminal where the notification will be received and displayed, respectively, is prompted in a step S14 to accept the continuation of the forwarded call or not. If the call is related to an important business or private relationship, it seems to be appropriate to accept, otherwise maybe not. However, the possibility to limit the amount of costs for call forwarding charges while having the opportunity to individually extent a call duration in a forwarding connection is a very comfortable and flexible feature of the present invention.

In any case, the refusal of the continuation of the forwarded call will lead to a clearing of this call while the acceptance would result in the forwarded calls continuation until its end. Since the reason for activating a forwarding service could in many cases be the fact that a terminal is closed or for other reasons physically not reachable, or simply for the sake of convenience, an automated decision according to step S15 would be even more comfortable. Such an automated decision can have more or less conditions in which cases a forwarded call is allowed to continue despite of a met break-off condition, e.g. certain calling party numbers are allowed to continue "eternally" thus resulting in that there is no break-off condition present for them at all. A more complicated structure of such an automated process is according to the present invention conceivable and its possibility intended. Anyway, such an automated process will most likely be based on the calling numbers.

In contrast thereto, deciding by a manual input to the terminal, to which the notification is sent, over the continuation of a forwarded call might in some cases be more appropriate. However, this case is also included in the present invention, but brings along the theoretical drawback that the network waits for this input of the user. Hence, to solve this problem, a timer can be activated after the expiry of which the forwarded call is cleared.

In any case, if the result of step S15 is that the forwarded call shall continue, there is a step S11" in which the forwarding of the call until its end is performed. Optionally, also then a notification can be sent to the user in a step S13" about all or exclusively the unknown parameters of this "second part" of the forwarded call. Consequently, in that case a step S12" of establishing a content of the notification would exist which corresponds to the aforesaid about such content establishment.

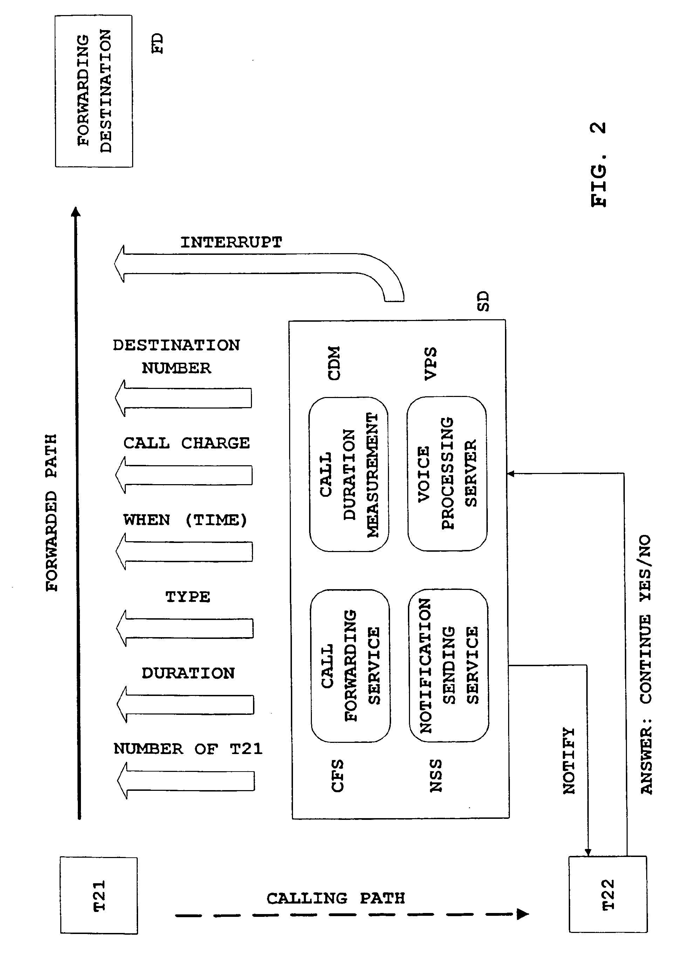

Referring now to Fig. 2, there are shown the elements of a communication network being capable to adopt the present invention.

As can be gathered from Fig. 2, there is a terminal T21 calling a terminal T22. This terminal T22, however, has one or more forwarding conditions set which are now fulfilled. Accordingly, the call is forwarded by a call forwarding service device CFS to a forwarding destination FD. To this call forwarding service device, many of the aforementioned parameters of call forwarding might be apparent, as the number of the calling terminal T21, the type of call forwarding, the time of call forwarding, the call charge, and the destination number. By determining these parameters, a lot of the content of the notification according to the present invention can be established. However, for those parameters which perhaps are not apparent to this call forwarding service device, according to the present invention there is a device for that purpose provided, for example a call duration measurement device CDM for measuring the call duration.

Having the content of the notification established, the notification is sent to the terminal T22 by a notification sending service device NSS for displaying the information about the forwarded call. It is to be noted that according to the present invention it is not necessary that the notification is sent to the originally called terminal, but can be sent to any terminal of the called user which terminal can be predetermined.

If a break-off condition is provided according to the aforesaid, the user of the terminal T22 will manually or automatically send an answer to the call forwarding service device whether a forwarded call might continue or not. However, at the very moment when the break-off condition is met, the call forwarding service device CFS interrupts the forwarded call. Then, either the call forwarding service device CFS waits for a specified time period whether an answer arrives from the terminal, or in case of an automated process or when said answer arrives, the call forwarding service device CFS immediately acts in correspondence with the automated or manual input answer. Accordingly, if the specified time period has expired or the answer was "no", the forwarded call according to the forwarding path is cleared, and if the answer was "yes", the call forwarding continues.

Although there are several devices mentioned here for carrying out the invention, it is expressly mentioned that the number of devices is irrelevant for that purpose, for example, all functionalities necessary for providing a communication network according to the present invention can be included in a single device SD. On the other hand, according to the present invention it is not necessary that a functionality is implemented alone or with other functionalities in one device, that is, each of the aforesaid functionalities can be distributed over several devices which, together, form sort of a logical device for carrying out the respective imparted functionality. For example, the call forwarding device and its functionality, respectively, can be distributed over communication network entities such as a mobile services switching center (MSC), a CAMEL (Customized Application for Mobile network Enhanced Logic) service environment (CSE) and a Wireless Telephony Applications server or just over a mobile services switching center (MSC) and a short message service center (SMSC) and so on.

The present invention can be very beneficial implemented by the use of the so-called intelligent network (IN). Therein, the forwarded call can be triggered from the forwarding gateway mobile services switching center (GMSC) or from the forwarding home location register to the Customized Applications for Mobile network Enhanced Logic (CAMEL) Service Environment (CSE) service logic, which requests the sending of the notification.

Furthermore, also the Wireless Application Protocol (WAP) with its Wireless Telephony Application (WTA) can be beneficially used for implementing the present invention. In this case, the notification can provide the numbers or the forwarding indication to a respective terminal and the user can retrieve the numbers by using a WAP application.

One embodiment of the type of the notification would be a message of the short message service (SMS). Similarly, also a packet data bearer may be used for the sending of the notification.

In case of an implementation among the intelligent network, the sending of the SMS is done by a service control point (SCP), so that the forwarding leg of the call triggers to this SCP.

Another embodiment of the type of the notification can be a terminal terminated unstructured supplementary service data (USSD) which may also request a response from the user, while still another embodiment is that there is a voice processing server VPS, as shown in Fig. 2, which provides the respective information. Such a voice notification can be accompanied by processable data for the purpose as explained above.

As regards the case of limiting the forwarded call duration there is also a beneficial use of WTA possible. The separate specification WTA brought along with WAP enables WAP to interwork with voice services. The WTA provides several means therefor.

Accordingly, WTA comprises service indications that enable a WTA server to instruct the user agent (i.e. browser) to download and execute the WAP content from a uniform resource locator (URL) given in the service indication. The WAP content addressed in the URL can also be downloaded to a user agent repository inside the terminal beforehand.

The WTA comprises also a WTAI (Wireless Telephony Applications Interface) which is an application programmable interface (API) that enables WAP content to invoke functions in the mobile station, e.g. make calls, answer calls, send SMS, handle mutlicalls, access phonebook etc. WTA also comprises event catalogues that enable the WAP content to intercept events like an incoming call, SMS etc.

Besides, it is noted that a WTA server may act in communication with a CSE or with a MSC or with a home location register (HLR) for the mentioned purposes.

Consequently, according to the present invention, there is an embodiment in which all forwarded calls are triggered either in the GMSC or in the visited mobile services switching center (VMSC) from the forwarding party originating basic call state model (O-BCSM). The triggered intelligent network service logic measures a total duration for the forwarded call. When a duration or price threshold is reached for a given call or alternatively for all forwarded calls within a certain time period, a WTA service indication is given for the terminal of the forwarding user. The user is then prompted for acceptance to continue the forwarded call. If there is no answer from the forwarding user within a specified time, the forwarded call is cleared. The WTA service indication and duration monitoring may be triggered only for numbers not within a list of allowed numbers.

The benefit of the use of WAP/WTA is that only a data message bearer is needed for the communication with the forwarding party. Another benefit of the use of WAP/WTA is the possibility for the WAP/WTA user agent to automatically indicate the forwarding content to the forwarding party without a need for her or him to separately check and retrieve incoming short messages.

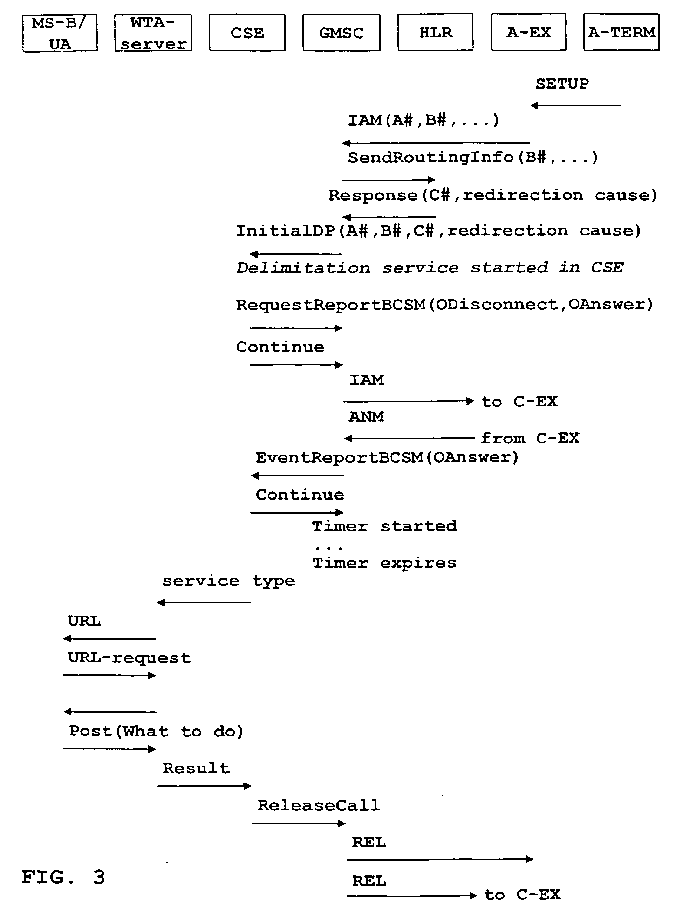

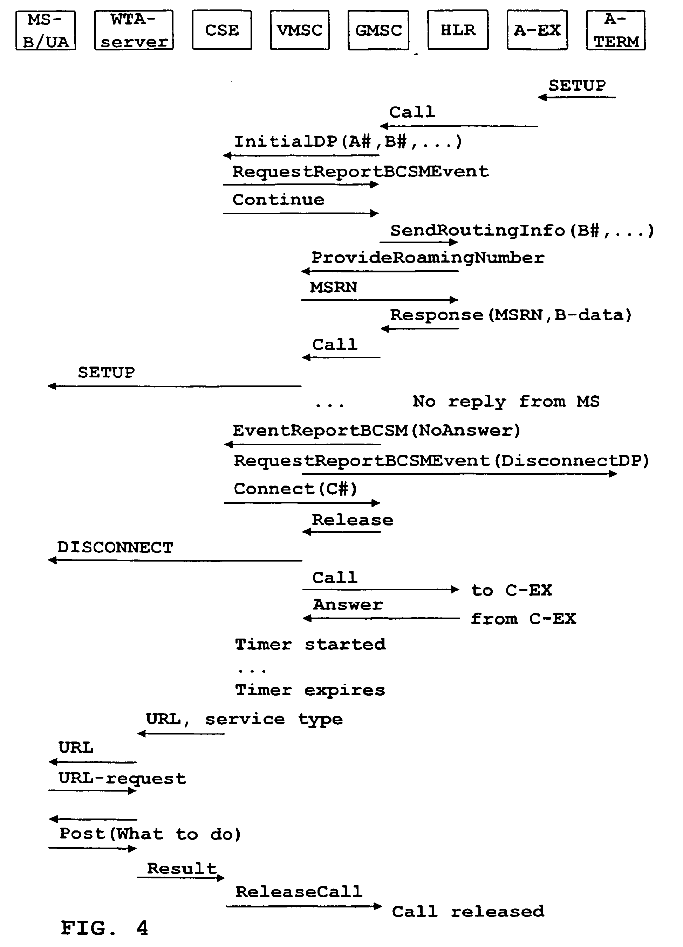

Referring now to Fig. 3, an embodiment of the present invention will be described in the following, wherein concrete examples for the contributing devices are given and the description is made by listing the process of signaling between these devices. Whenever it is described hereinafter that information is exchanged (words like send, submit and so on) one should bear in mind that this is based on a signaling between the respective devices (this is also valid for Fig. 4 to be described later).

Specifically, Fig. 3 shows an embodiment of unconditional forwarding delimited by utilizing the IN/WAP embodiment of the present invention.

At first, the A-terminal signals an setup message SETUP (a call setup message) to a calling party switch A-EX. Then, the calling party switch A-EX submits an initial address message to the gateway mobile services switching center GMSC including, for example, numbers of the A-terminal and the B-terminal and so on. Next, a routing information request is sent from the GMSC to a home location register HLR including the B-subscriber number and so on. Thereafter, the home location register HLR responds with a C-number (the number to which the call is forwarded) and a redirection cause for which the call is redirected. After that, the gateway mobile services switching center sends an InitialDP message, i.e. a triggering message containing a detection point initializing containing the A-, B-, and C-number and the redirection cause to a CAMEL service environment CSE and a service logic.

At this point in the process, the delimitation service is started in the CAMEL service environment CSE. Thus, the CAMEL service environment CSE requests the reporting of call disconnection from the gateway mobile services switching center GMSC. This essentially causes that a control relationship remains between the CAMEL service environment CSE and the gateway services switching center GMSC. Then, the CAMEL service environment CSE instructs the gateway services switching center GMSC to continue call processing.

Then, the gateway mobile services switching center GMSC signals an initial address message IAM to a destination party switch C-EX, and the destination party switch C-EX answers with an answer message ANM. The answer event is then reported to the CAMEL service environment CSE, again followed by a respective call continue instruction.

Next, a timer is started and its expiry awaited. After that expiry, the CAMEL service environment submits a content generation request to a WTA server. The forwarding content is generated into the WTA-server, e.g. a time of forwarding, the A-subscriber number, the redirection cause and so on. A uniform resource locator URL is sent by the WTA server to the B-terminal/user agent MS-B/UA, e.g. a WAP browser.

Alternatively, the generated content, i.e. the WAP deck or hyper text markup language (HTML) page, is directly pushed to the terminal using WAP push, i.e. a uniform resource location indication (WTA service indication) followed by a content retrieval by the terminal are not needed as separate steps. Additionally, in some implementations, the WTA server functionality and the CAMEL service environment CSE could be integrated into one node and functionality, where the steps as shown in Fig. 3 for the WTA server and the CAMEL services environment are performed.

Referring now back to Fig. 3, the WTA server sends the uniform resource locator to the B-terminal/user agent MS-B/UA, e.g. a WAP browser. Then, the B-terminal/user agent MS-B/UA submits a uniform resource location request, i.e. content request to the WTA server, which server answers the request, after which the WTA server is informed by the B-terminal/user agent MS-B/UA what to do further. Accordingly, the WTA server submits a result to the CAMEL services environment CSE which, in turn, signals to the gateway mobile services switching center GMSC to release the call. A respective release message REL is sent from the gateway mobile services switching center firstly to the calling party switch A-EX and secondly to the destination party switch C-EX.

Although the process may continue further, the substantial signaling procedures according to this embodiment of the present invention are described so far.

According to still another embodiment of the present invention, the call forwarding can also be instructed by the CAMEL service environment CSE. This is the case, for example, where a forwarding service in the CAMEL service environment CSE is notified that the called party is busy, unreachable or does not answer. The forwarding destination can in intelligent network based services be based on several other criteria like time-of-day, calling party number and forwarding party location (obtained to the CAMEL service environment CSE form the home location register HLR or an event geographic location server), even some calling party selection via a voice menu provided by the forwarding service to the calling party is possible. The CAMEL service environment CSE instructs call forwarding to the MSC. The CAMEL service environment CSE starts supervising the call, and notifies the forwarding party when a specified time or charge limit has been reached.

The benefit of the use of the invention in the context of intelligent network (IN) based call forwarding services is that the called party may not be aware which forwarding conditions are applicable at a given moment and which have resulted in the forwarding of the call. Therefore, the called party should be made aware of the fact that the call forwarding has occurred.

Thus, as can be gathered from Fig. 4, a call is established from an A-terminal to a calling party switch A-EX by a setup message SETUP and from there to a gateway mobile services switching center. Therein, a triggering is obtained by a first home location register inquiry. Next, the gateway mobile services switching center GMSC sends an InitialDP message, i.e. a triggering message to the CAMEL service environment containing e.g. the calling and the called party numbers. The call forwarding or rerouting service is started at the CAMEL service environment CSE. Then, the CAMEL service environment CSE requests the report of outcomes in call setup, i.e. it arms the detection points for route select failure, busy, no answer and answer events. After that, the CAMEL service environment CSE allows the call setup to continue in the gateway mobile services switching center GMSC.

Next, a routing information is sent from the GMSC to a home location register HLR including the B-subscriber number and so on. In turn, the home location register requests a visited mobile services switching center VMSC to provide a terminal roaming number MSRN which is respectively answered by the visited mobile services switching center. As a consequence, the home location register HLR responds to the gateway mobile services switching center with the terminal roaming number and data of the B-terminal. Accordingly, the call proceeds further from the gateway mobile services switching center GMSC to the visited mobile services switching center VMSC, from which the call is setup to the B-terminal/user agent MS-B/UA.

However, according to this embodiment of the present invention, the case is considered that the B-terminal does not reply. Hence, the gateway mobile services switching center reports to the CAMEL services environment with a basic call state model event 'no answer'. Then the CAMEL services environment CSE requests the gateway mobile services switching center GMSC to route the call to the number C# by a using Connect operation. Then, the call is forwarded by the gateway mobile services switching center GMSC to the destination party switch C-EX.

If only a notification on call forwarding is desired, the steps of content generation request, content generation and so on should follow e.g. after the CAMEL service environment CSE has issued the Connect operation.

At some time, there will be an answer from the destination party switch C-EX. Next, a timer is started and its expiry awaited. After that expiry, the CAMEL services environment submits a content generation request to a WTA server. The forwarding content is generated into the WTA-server, e.g. a time of forwarding, the A-subscriber number, the redirection cause and so on. Generally, the forwarding content may include the conditions that have resulted in call forwarding. A uniform resource locator URL is sent by the WTA server to the B-Terminal/user agent MS-B/UA, e.g. a WAP browser.

In an alternative embodiment, the forwarding content may provide to the called party a selection where the forwarding party warns the calling party and the forwarded-to party that the call is about to be released. Later on, the forwarding party may select that the call is immediately released. The forwarding party may also be prompted for the duration the call is allowed to continue.

Alternatively, the generated content, i.e. the WAP deck or hyper text markup language (HTML) page, is directly pushed to the terminal using WAP push, i.e. a uniform resource location indication (WTA service indication) followed by a content retrieval by the terminal are not needed as separate steps. Additionally, in some implementations, the WTA server functionality and the CAMEL service environment CSE could be integrated into one node and functionality, where the steps as shown in Fig. 4 for the WTA server and the CAMEL services environment are performed.

Referring now back to Fig. 4, the WTA server sends the uniform resource locator to the B-terminal/user agent MS-B/UA, e.g. a WAP browser. Then, the B-terminal/user agent MS-B/UA submits a uniform resource location request, i.e. a content request to the WTA server, which server answers the request, after which the WTA server is informed by the B-terminal/user agent MS-B/UA what to do further. Accordingly, the WTA server submits a result to the CAMEL services environment CSE which, in turn, signals to the gateway mobile services switching center GMSC to release the call. With the performance of the call releasing, the substantial parts of the signaling sequence according to the present embodiment of the present invention are depicted.

In still another embodiment of the present invention, the B-terminal/user agent MS-B/UA may be configured to automatically reply to the forwarding content. However, in that case the forwarding content may just be a data message in machine interpretable form. The data message is received, interpreted and replied by a specific content downloaded to the terminal beforehand. The decision for reply is based on user preferences entered by the user beforehand.

In yet another embodiment, an executable forwarding content received by the terminal at the step of URL request reply, i.e. a wireless markup language deck or a hypertext markup language page or a Java code reads user stored preference data from the terminal and makes a reply decision on its own to the WTA server.

As is described above, the present invention provides a method of notifying a call forwarding party about a forwarded call, said method comprising the steps of forwarding a call S11 from a calling party T21 to a destination FD defined by said call forwarding party T22; establishing a content S12 of a notification about said forwarded call; and sending said notification S13 by a service NSS of a communication network to a terminal T22 of said call forwarding party, wherein said notification comprises said content.

It should be understood that the above description and accompanying figures are only intended to illustrate the present invention by way of example. The preferred embodiments of the present invention may thus vary within the scope of the attached claims.

## Claims

1. A method of notifying a call forwarding party about a forwarded call, said method comprising the steps of
forwarding a call **(S11)** from a calling party **(T21)** to a destination **(FD)** defined by said call forwarding party **(T22);**
establishing a content **(S12)** of a notification about said forwarded call; and
sending said notification **(S13)** by a service **(NSS)** of a communication network to a terminal **(T22)** of said call forwarding party, wherein said notification comprises said content.

2. A method according to claim 1, wherein said content comprises information about at least one of a calling party number, a call duration, a type of forwarding, a time of forwarding, a call charge and a number to which said call has been forwarded.

3. A method according to claim 1, wherein said information comprised by said content of said notification corresponds to data which is processable by said terminal **(T22)** of said call forwarding party.

4. A method according to claim 1, wherein said type of said notification is that of a message of the Short Message Service.

5. A method according to claim 1, wherein said type of said notification is that of terminal terminated Unstructured Supplementary Service Data.

6. A method according to claim 1, wherein said sending of the notification is performed by utilizing a packet data bearer.

7. A method according to claim 1, wherein said type of said notification is a speech transmission of a voice processing server **(VPS).**

8. A method according to claim 1, wherein said service **(NSS)** responsive for sending said notification to a terminal **(T22)** of a call forwarding party is a service within the Customized Applications for Mobile network Enhancement Logic Service Environment.

9. A method according to claim 1, wherein said service **(NSS)** responsive for sending said notification to a terminal **(T22)** of a call forwarding party is a service within a Wireless Telephony Applications server.

10. A method according to claim 1, wherein said service **(NSS)** responsive for sending said notification to a terminal **(T22)** of a call forwarding party is a service within intelligent network service control point or CAMEL service environment **(CSE).**

11. A method according to claim 1, wherein said call forwarding is requested by a forwarding service within intelligent network service control point or CAMEL service environment **(CSE).**

12. A method according to claim 1, wherein said content includes at least part of the conditions that have resulted in call forwarding.

13. A method according to claim 12, wherein said conditions are the data on which said forwarding service has made the decision to forward the call.

14. A method according to any one of claims 1 to 13, wherein a break-off condition of said forwarded call is predefined by a user of said terminal **(T22),** and said notification is sent when said break-off condition is fulfilled **(S10),** after which
said method further comprises the step of
prompting said user **(S14, S15)** of said terminal (T22) to accept or refuse a continuation of said forwarded call.

15. A method according to claim 14, wherein said break-off condition is one of a maximal call charge and a maximal call duration.

16. A method according to claim 14, wherein said break-off condition depends on the calling party number, including the possibility that no break-off condition exists for some certain calling party numbers.

17. A method according to claim 14, wherein an input to said terminal **(T22)** in reaction to said prompting **(S14)** is manually performed by said user.

18. A method according to claim 17, wherein said forwarded call is cleared if there is no input within a specified time.

19. A method according to claim 14, wherein a reaction of said terminal **(T22)** to said prompting is automatically performed according to a presetting of said terminal **(T22),** which presetting is input by said user.

20. A communication network comprising
a call forwarding service device **(CFS)** which is able to determine a calling party number;
a device for measuring a call duration **(CDM)** of a forwarding call; and
a service device **(NSS)** for sending a notification to a terminal **(T22)** of a call forwarding party.

21. A communication network according to claim 20, wherein said call forwarding service device **(CFS)** is also able to determine a type of forwarding, a time of forwarding, a call charge and a number **(FD)** to which said call has been forwarded.

22. A communication network according to claim 20, further comprising a voice processing server device **(VPS).**

23. A communication network according to any one of the claims 20 to 22, wherein at least some of the functionalities of said call forwarding service device **(CFS),** said measuring device **(CDM),** said notification sending service device **(NSS)** and said voice processing server device **(VPS)** are implemented into one single device **(SD).**

24. A communication network according to any one of the claims 20 to 22, wherein at least one of the functionalities of said call forwarding service device **(CFS),** said measuring device **(CDM),** said notification sending service device **(NSS)** and said voice processing server device **(VPS)** is distributed over at least two different devices.

25. A terminal for forwarding a call, said terminal **(T22)** comprising
means adapted for setting a call forwarding service device **(CFS)** of a communication network to which network said terminal **(T22)** subscribes;
means adapted for receiving a notification from said call forwarding service device **(CFS)** about a forwarded call which was directed to and forwarded by said terminal according to the setting of said corresponding means; and
means adapted for displaying a content of said notification.

26. A terminal according to claim 25, further comprising means for processing data corresponding to information comprised by said content of said notification.

27. A terminal according to claim 26, further comprising means for automatically performing a reaction **(S15)** to a prompting **(S14)** of a user of said terminal **(T22)** by a service **(NSS)** of said communication network for sending said notification, which automatic performance is preset by said user.

## Patentansprüche

1. Verfahren zum Benachrichtigen einer rufweiterleitenden Partei bezüglich eines weitergeleiteten Rufes, mit den Schritten
Weiterleiten eines Rufs (S11) von einer rufenden Partei (T21) zu einem Ziel (FD), das durch die rufweiterleitende Partei (T22) definiert wird,
Aufbauen eines Inhalts (S12) einer Benachrichtigung bezüglich des weitergeleiteten Rufes, und
Senden der Benachrichtigung (S13) durch einen Dienst (NSS) eines Kommunikationsnetzwerks zu einem Endgerät (T22) der rufweiterleitenden Partei, wobei die Benachrichtigung den Inhalt aufweist.

2. Verfahren gemäß Anspruch 1, wobei der Inhalt Informationen bezüglich einer Nummer einer rufenden Partei, einer Rufdauer, einer Weiterleitungsart, eines Weiterleitungszeitpunkts, einer Rufgebühr und/oder einer Nummer, zu der der Ruf weitergeleitet wurde, umfasst.

3. Verfahren gemäß Anspruch 1, wobei die durch den Inhalt der Benachrichtigung umfassten Informationen Daten entsprechen, die durch das Endgerät (T22) der rufweiterleitenden Partei verarbeitbar sind.

4. Verfahren gemäß Anspruch 1, wobei die Art der Benachrichtigung jene einer Benachrichtigung des Kurznachrichtendienstes (SMS) ist.

5. Verfahren gemäß Anspruch 1, wobei die Art der Benachrichtigung jene von endgerätterminierten unstrukturierten Zusatzdienstdaten (USSD) ist.

6. Verfahren gemäß Anspruch 1, wobei das Senden der Benachrichtigung durch Verwenden eines Paketdatenträgers durchgeführt wird.

7. Verfahren gemäß Anspruch 1, wobei die Art der Benachrichtigung eine Sprachübertragung eines Stimmverarbeitungsservers (VPS) ist.

8. Verfahren gemäß Anspruch 1, wobei der Dienst (NSS), der für ein Senden der Benachrichtigung zu einem Endgerät (T22) einer rufweiterleitenden Partei verantwortlich ist, ein Dienst innerhalb der Dienstumgebung mit angepassten Anwendungen für ein Mobilnetzwerk mit verbesserter Logik (CAMEL) ist.

9. Verfahren gemäß Anspruch 1, wobei der Dienst (NSS), der für ein Senden der Benachrichtigung zu einem Endgerät (T22) einer rufweiterleitenden Partei verantwortlich ist, ein Dienst innerhalb eines Drahtlostelefonieanwendungsservers ist.

10. Verfahren gemäß Anspruch 1, wobei der Dienst (NSS), der für ein Senden der Benachrichtigung zu einem Endgerät (T22) einer rufweiterleitenden Partei verantwortlich ist, ein Dienst innerhalb eines Dienststeuerpunkts für ein intelligentes Netzwerk oder einer CAMEL- Dienstumgebung (CSE) ist.

11. Verfahren gemäß Anspruch 1, wobei das Rufweiterleiten durch einen Weiterleitungsdienst innerhalb eines Dienststeuerpunkts für ein intelligentes Netzwerk oder einer CAMEL- Dienstumgebung (CSE) angefordert wird.

12. Verfahren gemäß Anspruch 1, wobei der Inhalt zumindest einen Teil der Bedingungen beinhaltet, die zu einer Rufweiterleitung führten.

13. Verfahren gemäß Anspruch 12, wobei die Bedingungen die Daten sind, bezüglich derer der Weiterleitungsdienst die Entscheidung zum Weiterleiten des Rufs traf.

14. Verfahren gemäß einem der Ansprüche 1 bis 13, wobei eine Abbruchbedingung des weitergeleiteten Rufes durch einen Benutzer des Endgeräts (T22) vordefiniert wird, und die Benachrichtigung gesendet wird, wenn die Abbruchbedingung erfüllt ist (S10), wonach das Verfahren weiterhin den Schritt umfasst
Auffordern des Benutzers (S14, S15) des Endgeräts (T22), eine Fortsetzung des weitergeleiteten Rufes zu akzeptieren oder abzulehnen.

15. Verfahren gemäß Anspruch 14, wobei die Abbruchbedingung eine maximale Rufgebühr oder eine maximale Rufdauer ist.

16. Verfahren gemäß Anspruch 14, wobei die Abbruchbedingung von der Nummer einer rufenden Partei einschließlich der Möglichkeit abhängt, dass für einige bestimmte Nummern von rufenden Parteien keine Abbruchbedingung existiert.

17. Verfahren gemäß Anspruch 14, wobei eine Eingabe in das Endgerät (T22) in Reaktion auf das Auffordern (S14) durch den Benutzer manuell durchgeführt wird.

18. Verfahren gemäß Anspruch 17, wobei der weitergeleitete Ruf gelöscht wird, falls innerhalb einer spezifizierten Zeit keine Eingabe erfolgt.

19. Verfahren gemäß Anspruch 14, wobei eine Reaktion des Endgeräts (T22) auf das Auffordern gemäß einer Voreinstellung des Endgeräts (T22) automatisch durchgeführt wird, wobei die Voreinstellung durch einen Benutzer eingegeben wird.

20. Kommunikationsnetzwerk mit
einer rufweiterleitenden Dienstvorrichtung (CFS), die in der Lage ist, eine Nummer einer rufenden Partei zu bestimmen,
einer Vorrichtung zum Messen einer Rufdauer (CDM) eines weitergeleiteten Rufes, und
einer Dienstvorrichtung (NSS) zum Senden einer Benachrichtigung zu einem Endgerät (T22) einer rufweiterleitenden Partei.

21. Kommunikationsnetzwerk gemäß Anspruch 20, wobei die rufweiterleitende Dienstvorrichtung (CFS) ebenso in der Lage ist, eine Weiterleitungsart, einen Weiterleitungszeitpunkt, eine Rufgebühr und eine Nummer (FD), zu der der Ruf weitergeleitet wurde, zu bestimmen.

22. Kommunikationsnetzwerk gemäß Anspruch 20, weiterhin mit einer Stimmverarbeitungsservervorrichtung (VPS).

23. Kommunikationsnetzwerk gemäß einem der Ansprüche 20 bis 22, wobei zumindest ein Teil der Funktionalitäten der rufweiterleitenden Dienstvorrichtung (CFS), der Messvorrichtung (CDM), der Benachrichtigungssendedienstvorrichtung (NSS) und der Stimmverarbeitungsservervorrichtung (VPS) in eine einzelne Vorrichtung (SD) implementiert ist.

24. Kommunikationsnetzwerk gemäß einem der Ansprüche 20 bis 22, wobei zumindest eine der Funktionalitäten der rufweiterleitenden Dienstvorrichtung (CFS), der Messvorrichtung (CDM), der Benachrichtigungssendedienstvorrichtung (NSS) und der Stimmverarbeitungsservervorrichtung (VPS) über zumindest zwei unterschiedliche Vorrichtungen verteilt ist.

25. Endgerät zum Weiterleiten eines Rufes, wobei das Endgerät (T22) umfasst
eine Einrichtung, die zu einem Einstellen einer rufweiterleitenden Dienstvorrichtung (CFS) eines Kommunikationsnetzwerks, an dem das Endgerät (T22) teilnimmt, angepasst ist,
eine Einrichtung, die zu einem Empfangen einer Benachrichtigung von der rufweiterleitenden Dienstvorrichtung (CFS) bezüglich eines weitergeleiteten Rufes, der an das Endgerät gerichtet und durch dieses weitergeleitet wurde, gemäß der Einstellung der entsprechenden Einrichtung angepasst ist, und
eine Einrichtung, die zu einem Anzeigen eines Inhalts der Benachrichtigung angepasst ist.

26. Endgerät gemäß Anspruch 25, weiterhin mit einer Einrichtung zum Verarbeiten von Daten, die Informationen entsprechen, die durch den Inhalt der Benachrichtigung umfasst sind.

27. Endgerät gemäß Anspruch 26, weiterhin mit einer Einrichtung zum automatischen Durchführen einer Reaktion (S15) auf ein Auffordern (S14) eines Benutzers des Endgeräts (T22) durch einen Dienst (NSS) des Kommunikationsnetzwerks zum Senden der Benachrichtigung, wobei die automatische Durchführung durch den Benutzer voreingestellt ist.

## Revendications

1. Procédé de notification à une partie qui a demandé le transfert d'appel concernant un appel transféré, ledit procédé comprenant les étapes consistant à
transférer un appel (S11) d'une partie appelante (T21) à une destination (FD) définie par ladite partie qui a demandé le transfert d'appel (T22) ;
établir un contenu (S 12) d'une notification concernant ledit appel transféré ; et
envoyer ladite notification (S13) par un service (NSS) d'un réseau de communication à un terminal (T22) de ladite partie qui a demandé le transfert d'appel, où ladite notification comprend ledit contenu.

2. Procédé selon la revendication 1, dans lequel ledit contenu comprend des informations concernant au moins un élément parmi les éléments suivants : un numéro de partie appelante, une durée d'appel, un type de transfert, une heure de transfert, une taxe d'appel et un numéro vers lequel ledit appel a été transféré.

3. Procédé selon la revendication 1, dans lequel lesdites informations comprises dans ledit contenu de ladite notification correspondent à des données qui peuvent être traitées par ledit terminal (T22) de ladite partie qui a demandé le transfert d'appel.

4. Procédé selon la revendication 1, dans lequel ledit type de ladite notification est celui d'un message du service de messages courts.

5. Procédé selon la revendication 1, dans lequel ledit type de ladite notification est celui de données de service supplémentaire non structurées à destination d'un terminal.

6. Procédé selon la revendication 1, dans lequel ledit envoi de la notification est effectué en utilisant un support de données par paquets.

7. Procédé selon la revendication 1, dans lequel ledit type de ladite notification est une transmission de la parole d'un serveur de traitement vocal (VPS).

8. Procédé selon la revendication 1, dans lequel ledit service (NSS) chargé de l'envoi de ladite notification à un terminal (T22) d'une partie ayant demandé le transfert d'appel est un service compris dans l'environnement de service de la logique d'amélioration d'applications personnalisées pour réseau mobile.

9. Procédé selon la revendication 1, dans lequel ledit service (NSS) chargé de l'envoi de ladite notification à un terminal (T22) d'une partie ayant demandé le transfert d'appel est un service compris dans un serveur d'applications de téléphonie sans fil.

10. Procédé selon la revendication 1, dans lequel ledit service (NSS) chargé de l'envoi de ladite notification à un terminal (T22) d'une partie ayant demandé le transfert d'appel est un service compris dans un point de contrôle de service de réseau intelligent ou de l'environnement de service CAMEL (CSE).

11. Procédé selon la revendication 1, dans lequel ledit transfert d'appel est demandé par un service de transfert compris dans un point de contrôle de service de réseau intelligent ou de l'environnement de service CAMEL (CSE).

12. Procédé selon la revendication 1, dans lequel ledit contenu inclut au moins une partie des conditions qui ont entraîné le transfert d'appel.

13. Procédé selon la revendication 12, dans lequel lesdites conditions sont les données sur lesquelles ledit service de transfert a pris la décision de transférer l'appel.

14. Procédé selon l'une quelconque des revendications 1 à 13, dans lequel une condition d'interruption dudit appel transféré est prédéfinie par un utilisateur dudit terminal (T22), et ladite notification est envoyée lorsque ladite condition d'interruption est remplie (S10), après quoi
ledit procédé comprend en outre l'étape consistant à
inviter ledit utilisateur (S 14, S 15) dudit terminal (T22) à accepter ou à refuser une continuation dudit appel transféré.

15. Procédé selon la revendication 14, dans lequel ladite condition d'interruption est une taxe d'appel maximale ou une durée d'appel maximale.

16. Procédé selon la revendication 14, dans lequel ladite condition d'interruption dépend du numéro de la partie appelante, incluant la possibilité qu'aucune condition d'interruption n'existe pour certains numéros de partie appelante.

17. Procédé selon la revendication 14, dans lequel une entrée dans ledit terminal (T22) en réaction à ladite invite (S14) est effectuée manuellement par ledit utilisateur.

18. Procédé selon la revendication 17, dans lequel ledit appel transféré est libéré s'il n'y a aucune entrée dans un temps spécifié.

19. Procédé selon la revendication 14, dans lequel une réaction dudit terminal (T22) à ladite invite est automatiquement effectuée selon un préréglage dudit terminal (T22), lequel préréglage est entré par ledit utilisateur.

20. Réseau de communication comprenant
un dispositif de service de transfert d'appel (CFS) qui est en mesure de déterminer un numéro de partie appelante ;
un dispositif pour mesurer une durée d'appel (CDM) d'un appel de transfert ; et
un dispositif de service (NSS) pour envoyer une notification à un terminal (T22) d'une partie qui a demandé le transfert d'appel.

21. Réseau de communication selon la revendication 20, dans lequel ledit dispositif de service de transfert d'appel (CFS) est également en mesure de déterminer un type de transfert, une heure de transfert, une taxe d'appel et un numéro (FD) vers lequel ledit appel a été transféré.

22. Réseau de communication selon la revendication 20, comprenant en outre un dispositif de serveur de traitement vocal (VPS).

23. Réseau de communication selon l'une quelconque des revendications 20 à 22, dans lequel au moins certaines des fonctionnalités dudit dispositif de service de transfert d'appel (CFS), dudit dispositif de mesure (CDM), dudit dispositif de service d'envoi de notification (NSS) et dudit dispositif de serveur de traitement vocal (VPS) sont mises en oeuvre dans un seul dispositif (SD).

24. Réseau de communication selon l'une quelconque des revendications 20 à 22, dans lequel au moins une des fonctionnalités dudit dispositif de service de transfert d'appel (CFS), dudit dispositif de mesure (CDM), dudit dispositif de service d'envoi de notification (NSS) et dudit dispositif de serveur de traitement vocal (VPS) est distribuée sur au moins deux dispositifs différents.

25. Terminal pour transférer un appel, ledit terminal (T22) comprenant
des moyens adaptés pour régler un dispositif de service de transfert d'appel (CFS) d'un réseau de communication auquel ledit terminal (T22) s'abonne ;
des moyens adaptés pour recevoir une notification en provenance dudit dispositif de service de transfert d'appel (CFS) concernant un appel transféré qui était dirigé vers et transféré par ledit terminal selon le réglage desdits moyens correspondants ; et
des moyens adaptés pour afficher un contenu de ladite notification.

26. Terminal selon la revendication 25, comprenant en outre des moyens pour traiter des données correspondant à des informations comprises par ledit contenu de ladite notification.

27. Terminal selon la revendication 26, comprenant en outre des moyens pour exécuter automatiquement une réaction (S 15) à une invite (S 14) d'un utilisateur dudit terminal (T22) par un service (NSS) dudit réseau de communication pour envoyer ladite notification, laquelle exécution automatique est préréglée par ledit utilisateur.
